# EUROPEAN PATENT SPECIFICATION

(11) **EP 3 092 379 B1**
(45) Date of publication and mention of the grant of the patent: **31.01.2018**
(21) Application number: 14816353.8
(22) Date of filing: 27.11.2014
(51) Int. Cl.: F01N 3/04, F01N 13/12

(54) **EXHAUST GAS SCRUBBER AND SHIP**
ABGAS SCRUBBER UND SCHIFF
ÉPURATEUR POUR GAZ D'ECHAPPEMENT ET BATEAU

(30) Priority: 28.11.2013 FI 20136191
(43) Date of publication of application: 16.11.2016
(73) Proprietor: Langh Patents Oy Ab, 21500 Piikkiö (FI)
(72) Inventor: LANGH, Hans, FI-21500 Piikkiö (FI)
(74) Representative: Kolster Oy Ab
(86) International application number: PCT/FI2014/050923
(87) International publication number: WO 2015/079115

(56) References cited:
- EP-A1- 1 857 169
- US-A1- 2010 206 171

## Description

### Background of the invention

The invention relates to an exhaust gas scrubber for cleaning exhaust gases from combustion engines, particularly ship engines, of impurities, the exhaust gas scrubber having a feed channel connected thereto for feeding exhaust gases containing impurities into and through a bed-like structure containing a filler material and arranged inside the exhaust gas scrubber and being, in an upright use position of the exhaust gas scrubber, where the flow direction of the exhaust gases is upwards, from below supported by a support grate having apertures, the exhaust gas scrubber comprising feed devices for feeding scrubbing water into the bed-like structure in a direction different from a flow direction of exhaust gases in the bed-like structure in order to reduce impurities in the exhaust gases such that the exhaust gases exit, cleaned, the bed-like structure and a discharge channel of the exhaust gas scrubber and the exhaust gas scrubber comprising a discharge outlet located in a bottom part of the exhaust gas scrubber and provided for discharging the scrubbing water containing impurities of the exhaust gases, i.e. effluent, from the exhaust gas scrubber. The invention also relates to a ship comprising such an exhaust gas scrubber.

An exhaust gas scrubber of the aforementioned kind is known from document US 2010/0206171 A1 and document EP 1857169 A1. The bed-like structure of the exhaust gas scrubber consists of a large number of filler pieces. The purpose of the filler pieces is to improve the cleaning efficiency by providing the bed-like structure with a large surface for the exhaust gases to come into contact with the scrubbing water. Although the bed-like structure is from below supported by the support grate, filler pieces may drop from the bed-like structure onto the bottom of the exhaust gas scrubber and enter a discharge outlet for discharging impurities-containing scrubbing water, i.e. effluent, from the exhaust gas scrubber. If the discharge outlet leads into a line provided with a pump for removing the effluent from the exhaust gas scrubber, a filter has to be arranged in front of the pump to prevent the filler pieces from entering the pump. Such entry of filler pieces into the pump would destroy the pump or prevent it from operating impeccably. The operation of the exhaust gas scrubber requires large amounts of effluent being removed therefrom. If the effluent is not removed, it may enter the ship engine, which is not acceptable since disturbance in the operation of the combustion engine or flooding of the combustion engine may result in serious safety risks.

It is known to prevent filler pieces from entering a pump used for moving the effluent by installing a duplex filter upstream of the pump. The operating principle of the duplex filter is that only one of its two filter chambers is used. If the first filter chamber is clogged, the second filter chamber is put to use. When the second filter chamber is in use, the first filter chamber is cleaned so as to enable it to be put to use when the second filter chamber becomes clogged. An advantage of the duplex filter is that it may be kept continuously in operation even if one of the filter chambers of the duplex filter is clogged. A problem with the duplex filter is, however, that its structure is complex and expensive. The duplex filter has also to be controlled so as to maintain its operation. If the duplex filter is used in ships for filtering the effluent being discharged from an exhaust gas scrubber, the removal of the effluent from the exhaust gas scrubber cannot be disturbed. It is complex and difficult to monitor and control the operation of the duplex filter such that the second filter chamber is put to use if the first one has been filled up enough to prevent the effluent from flowing. In addition, the duplex filter is large and difficult to install particularly in places where only limited and little space is available for installation, as is the case in connection with an exhaust gas scrubber for a ship. In view of the aforementioned reasons, the duplex filter is inconvenient and problematic to use for filtering the effluent from exhaust gas scrubbers.

### Brief description of the invention

An object of the invention is to provide a novel arrangement in connection with an exhaust gas scrubber which enables scrubbing water being discharged from the exhaust gas scrubber and containing impurities, i.e. effluent, to be reliably transferred from the exhaust gas scrubber to optional further processing with no risk of filler pieces originating from the bed-like structure moving along with the effluent during the transfer.

This object is achieved by an exhaust gas scrubber which is characterized in that the bottom part of the exhaust gas scrubber is provided with a filter located, in the upright use position of the exhaust gas scrubber, under the support grate, at a distance from the support grate, the filter having apertures having a size typically smaller than the size of the apertures in the grate to prevent the filler material from entering the discharge outlet.

The idea underlying the invention is to clean the effluent of filler pieces originating from the bed-like structure by a filter which is not separate from the exhaust gas scrubber but is arranged in the exhaust gas scrubber itself, i.e. inside a vessel of the exhaust gas scrubber.

Preferably, the filter is arranged below an inlet of the exhaust gas feed channel and, further, the filter is in the form of a filter plate whose diameter corresponds to the diameter of the exhaust gas scrubber. Such a filter is particularly easy to manufacture and install, and it also quite efficiently prevents the effluent from entering the exhaust gas feed channel and the ship engine even if the ship were rolling violently in a storm. No water is to enter the ship engine, because it would endanger the operation of the engine.

An exhaust gas scrubber according to the invention may preferably be such that it is provided with at least one by-pass path for flow of exhaust gases, the by-pass path being for conveying exhaust gases containing impurities past the bed-like structure and further out of the exhaust gas scrubber, the at least one by-pass path having blocking devices for setting the by-pass path from an open position to a blocking position in order to prevent impurities-containing exhaust gases from flowing through the by-pass path and, vice versa, from the blocking position to the open position in order to allow impurities-containing exhaust gases to flow through the by-pass path, the blocking devices comprising a perforated blocking plate, and when viewed downstream thereof, in the direction of flow of the exhaust gases, the by-pass path is provided with filler pieces for forming a cleaning space for cleaning exhaust gases, the cleaning space being arranged to be emptied of the filler pieces such that the filler pieces drop onto the filter when the blocking plate moves from the blocking position to the open position. Such an exhaust gas scrubber is particularly advantageous for the reliable operation of a ship engine because it cannot be clogged by impurities accumulating in the bed-like structure enough to prevent the exhaust gases from passing through the bed-like structure, and no risk exists that dropping the filler pieces into the bottom space of the exhaust gas scrubber would result in the filler pieces being discharged from the exhaust gas scrubber along with the effluent.

Preferred embodiments of the invention are disclosed in the attached dependent claims.

A further object of the invention is to provide a novel ship whose engine exhaust gases are cleaned by an exhaust gas scrubber with no risk of filler pieces being transferred to the effluent being discharged from the exhaust gas scrubber and to any optional further processing of the effluent.

A ship according to the invention is characterized in that the bottom part of the exhaust gas scrubber is provided with a filter located, in the upright use position of the exhaust gas scrubber, under the support grate, at a distance from the support grate, the filter having apertures having a size typically smaller than the size of the apertures in the grate to prevent the filler material from dropping into the discharge outlet.

Preferably, the ship comprises a cleaning unit for receiving and cleaning the effluent supplied from a discharge pipe of the exhaust gas scrubber and along a line, the line including a pump for transferring the effluent from the bottom part of the exhaust gas scrubber to the cleaning unit arranged in connection with the exhaust gas scrubber and comprising an effluent circuit for circulating the effluent in the effluent circuit which includes at least one membrane filter. Owing to the exhaust gas scrubber according to the invention, the operation of the pump in the line is reliable such that no filler pieces originating from the exhaust gas scrubber may enter it.

Preferred embodiments of the ship according to the invention are disclosed in the attached dependent claims.

An advantage of the exhaust gas scrubber and ship according to the invention is that it in a simple manner enables and ensures the operation of the exhaust gas scrubber and the cleaning unit optionally arranged in connection therewith with no need to employ a duplex filter in connection with removal of the effluent from the exhaust gas scrubber. Thus, owing to the invention, no complex duplex filter that is difficult to install and control is necessary in the line downstream of the discharge outlet for the effluent of the exhaust gas scrubber. The filter provided in the exhaust gas scrubber does not, in practice, increase the size of the exhaust gas scrubber, which makes the exhaust gas scrubber easier to install in a ship. Nevertheless, it may be built to have a surface area large enough not to be clogged even if a multitude of filler pieces were to land thereon.

### Brief description of the figures

The invention is now described in closer detail with reference to the accompanying drawing, in which
Figure 1 is a schematic view of a ship according to the invention which is provided with an exhaust gas scrubber according to the invention,
Figure 2 shows a first embodiment of the exhaust gas scrubber according to the invention,
Figure 3 shows a view along section line III - III of Figure 2,
Figure 4 shows a second embodiment of the exhaust gas scrubber according to the invention, and
Figure 5 shows a view along section line V - V of Figure 4.

### Detailed description of the invention

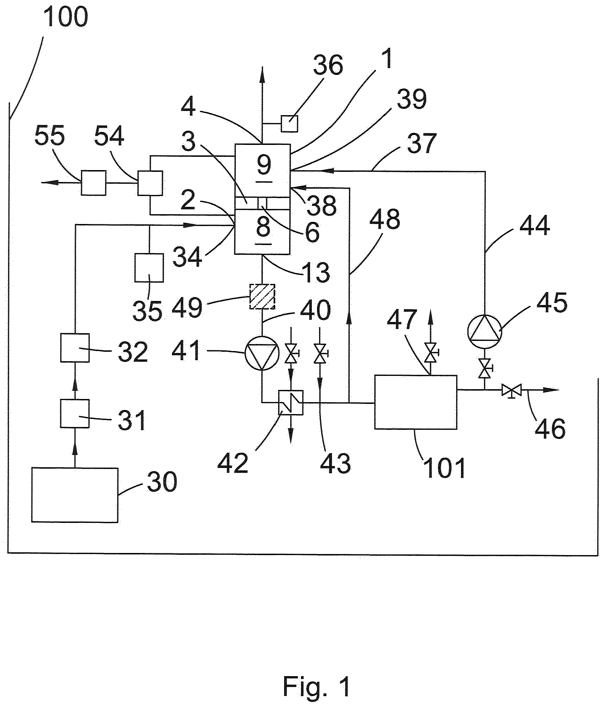

Figure 1 shows a ship designated by reference number 100. A combustion engine of the ship, which is typically a diesel engine, is designated by reference number 30. A catalyser connected to the combustion engine 30 is designated by reference number 31, while reference number 32 designates an exhaust gas boiler. The catalyser 31 reduces nitrogen oxide emissions. Advantageously, the catalyser 31 uses urea for reducing the nitrogen oxide emissions. The structure or operation of the catalyser 31 are not described in this connection since these are known to a person skilled in the art and the invention is not specifically directed to a catalyser. Exhaust gases cool down in the exhaust gas boiler 32. While the exhaust gas boiler 32 cools down the exhaust gases, thermal energy is recovered from the exhaust gases for the ship's various heating needs. The operation of the exhaust gas boiler 32 is known to a person skilled in the art, so the structure or operation of the exhaust gas boiler are not explained herein, either.

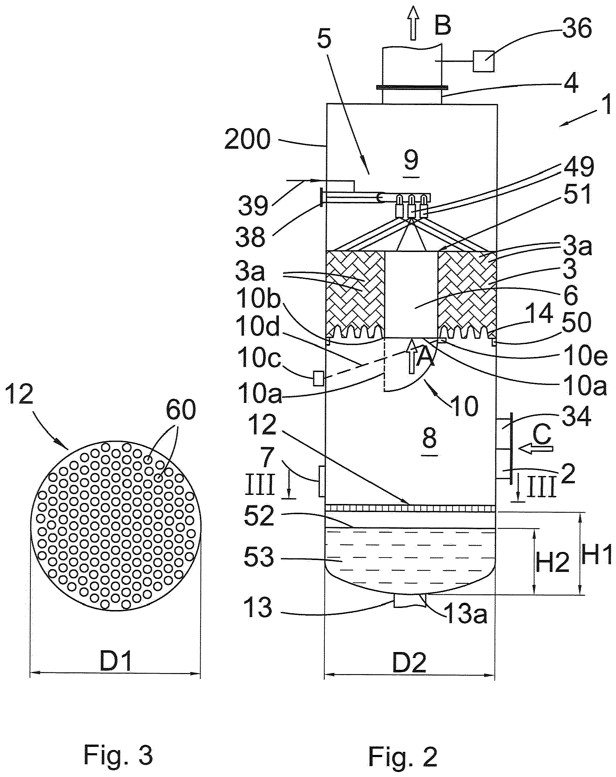

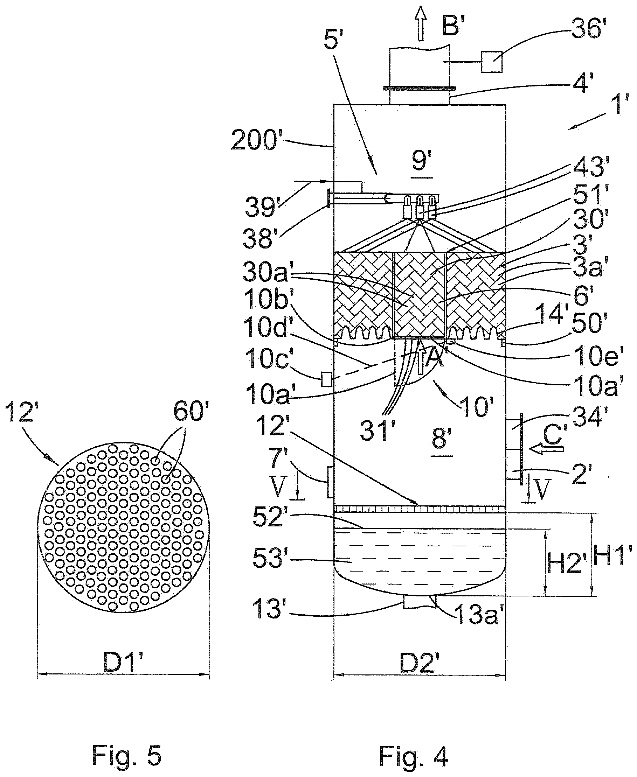

In the arrangement of Figure 1, the exhaust gases from the combustion engine 30 of the ship 100 are at a feed point 34 led into an exhaust gas scrubber 1. The exhaust gas scrubber comprises a vessel 200 in which the exhaust gases are scrubbed with water. A measuring device 35 may be used for determining the carbon dioxide concentration (CO₂ concentration) in the exhaust gases in percent by volume prior to feeding the exhaust gases into the exhaust gas scrubber 1. Owing to the exhaust gas boiler 32, the exhaust gases arrive at the exhaust gas scrubber 1 cooled down, whereby their volume and flow rate are smaller than with no exhaust boiler 32, and a scrubbing water demand for cleaning the exhaust gases in the exhaust gas scrubber decreases. Reference number 2 indicates a feed channel for feeding exhaust gases containing impurities into the exhaust gas scrubber 1. The feed channel 2 is connected to the exhaust gas feed point 34. It can be stated that the feed point 34 is also an exhaust gas reception point since it receives exhaust gases from the feed channel 2. In the exhaust gas scrubber 1, scrubbing water is sprayed on the exhaust gases, which is led inside the exhaust gas scrubber at a point 38 and optionally also through a line 37 at a point 39. Advantageously, the scrubbing water is basic, but neutral water or water with a pH value of less than 7 may also be used. The scrubbing water can be made basic by mixing it with NaOH, for example. The number and location of the scrubbing water feed points 38, 39 may vary. (Figures 2 and 4 show not only the scrubbing water feed points 38, 39, 38', 39' but also scrubbing water feed devices 5, 5' connected thereto inside the exhaust gas scrubber 1, 1'.) The cleaned exhaust gases exit the exhaust gas scrubber 1 at a point 4. (In Figures 2 and 4, arrows B and B', respectively, illustrate the exit of the exhaust gases.) A measuring device 36 is used for determining the sulphur dioxide concentration (SO₂ concentration) in the exhaust gases exiting the exhaust gas scrubber 1. When scrubbing exhaust gases, a ratio of SO₂/CO₂ is measured, where SO₂ is the sulphur dioxide concentration in percent by volume in flue gas after flue gas cleaning and CO₂ is the carbon dioxide concentration in percent by volume prior to flue gas cleaning. By adjusting the amount of water supplied to the exhaust gas scrubber, the operation of the exhaust gas scrubber 1 is adjusted such that the ratio SO₂/CO₂ is below a given required value, less than 25 ppm SO₂/CO₂ % (v/v) (that is, SO₂ (ppm)/CO₂ (% v/v)), preferably less than 10 ppm SO₂/CO₂ % (v/v), and most preferably less than 4.3 ppm SO₂/CO₂ % (v/v).

The exhaust gases are scrubbed in the exhaust gas scrubber 1 by feeding the exhaust gases through a bed-like structure 3 containing a filler material, whereby the exhaust gases at the same time move from a space 8 below the bed-like structure to a space 9 above the bed-like structure. At the same time, scrubbing water is fed inside the bed-like structure 3 from the space 9 above the bed-like structure. Thus, a feed direction of the scrubbing water is opposite to a flow direction of the exhaust gases. The feed direction of the scrubbing water need not be opposite to the flow direction of the exhaust gases, even though this is advantageous. The feed direction should, however, differ from the flow direction of the exhaust gases so as to bring the exhaust gases and the scrubbing water into a good and efficient contact with one another. It is clear that the exhaust gases in the space 8 do not flow entirely perpendicularly upward at all points of the space (after all, the exhaust gases are brought inside from the side of the exhaust gas scrubber, for instance). The main flow direction is, however, from the bottom upwards (which is illustrated by arrows A, A' in Figures 2 and 4). The scrubbing water may typically be basic. The feed rate of scrubbing water into the exhaust gas scrubber is in the order of 100 to 1000 m³/h, mostly depending on the output of the ship engine. The filler material of the bed-like structure 3 advantageously consists of metal pieces or filler pieces of another loose material, whose surface area is large in relation to their volume. Metal pieces (or other filler pieces) are for instance small pipe lengths or small saddle-shaped parts obtained by breaking a pipe. The filler pieces may also be spiral pieces, for instance. When the filler pieces are metal pieces, they are advantageously made of stainless steel or so-called acid-proof steel. Different filler pieces are commercially generally available to provide the bed-like structure. The filler pieces should be corrosion-proof. When the exhaust gases meet the scrubbing water in the bed-like structure, a multitude of the impurities in the exhaust gases attaches to the scrubbing water and the exhaust gases, cleaned of impurities, are discharged from a top part of the exhaust gas scrubber. Upon scrubbing, both solid impurities and impurities dissolved in the scrubbing water accumulate in the scrubbing water. Scrubbing water containing impurities, i.e. effluent, drops under gravity into the bottom part of the exhaust gas scrubber 1, from which it is removed through a discharge outlet 13a and a discharge pipe 13 as well as a line 40 to a cleaning unit 101 so as to be cleaned. Since the scrubbing of exhaust gases in an exhaust gas scrubber is known, the procedure of carrying out the scrubbing is not explained in more detail herein.

The effluent discharge pipe 13 leads to the line 40 provided with a pump 41 for transferring effluent from the bottom part of the exhaust gas scrubber through a heat exchanger 42 to the effluent cleaning unit 101. If necessary, water is fed into the line 40. A point 43 indicates a water feed point. The water may be fresh water, salt water, or water cleaned in the cleaning unit 101. Reference number 48 indicates a line for feeding water into the exhaust gas scrubber 1. The water cleaned in the cleaning unit 101 is removed through a line 46. The cleaned water may be led into a sea or back to the exhaust gas scrubber 1 through a line 44. When necessary, a pump 45 is used for increasing water pressure in the line 44. Reference number 47 indicates a point at which a medium containing a multitude of impurities is removed. The medium may be collected into an intermediate storage container (not shown).

The cleaning unit 101 advantageously comprises an effluent circuit including at least one membrane filter. The effluent is circulated in the effluent circuit such that the effluent is filtered through a semipermeable membrane of the membrane filter to obtain, on one hand, a cleaned effluent and, on the other hand, a residue containing impurities. The cleaned effluent exits the membrane filter and circulation of the effluent circuit while the residue keeps circulating and concentrating in the effluent circuit. It is arranged that the pH value of the cleaned effluent exiting the cleaning unit is at least 6.5. The concentrated effluent is typically removed at times from the cleaning unit 101 through the point 47.

In Figure 1, reference number 6 indicates a by-pass path arranged inside the exhaust gas scrubber 1 for exhaust gases. The by-pass path 6 is arranged inside the vessel 200 of the exhaust gas scrubber. Ordinarily, the flow of uncleaned exhaust gases in the by-pass path has been or is prevented. In certain exceptional cases, the by-pass path 6 is put to use for the flow of uncleaned exhaust gases. The purpose of the by-pass path 6 is to enable the exhaust gases to move past the bed-like structure 3 when impurities have over time accumulated in the bed-like structure enough to make the flow of exhaust gases insufficient for the ship engine to operate in a desired manner. Even though the exhaust gases, while moving through the by-pass path 6 past the bed-like structure 3, may be slightly cleaned on account of scrubbing water being sprayed thereon, in practice, however, the exhaust gases move almost uncleaned through the by-pass path. Figures 2 to 4 show different embodiments of the bed-like structure and the by-pass path.

Figure 2 shows an embodiment of the exhaust gas scrubber 1 of Figure 1 in closer detail. In the embodiment of Figure 2, scrubbing water is fed on the bed-like structure 3 from a plurality of nozzles 49 included in the scrubbing water feed devices 5. The number of nozzles 49 may vary. The flow direction of exhaust gases in the exhaust gas scrubber 1 is from the bottom upwards, from the space 8 to the space 9, which is illustrated by arrow A. Arrow C illustrates the feeding of uncleaned exhaust gases to the exhaust gas scrubber 1. Figure 2 shows that the bed-like structure 3 is supported on a support grate 14 in the exhaust gas scrubber 1. The support grate 14, in turn, is supported against a support 50 arranged on an inner circumference of the vessel 200 of the exhaust gas scrubber 1. The support 50 is preferably formed by an annular shoulder or a plurality of projections provided on an inner surface of the vessel 200 of the exhaust gas scrubber. The bed-like structure 3 is supported from below such that no filler material should be allowed to drop through the support grate 14. The filler material comprises a multitude of filler pieces 3a. In order for no filler pieces 3a being allowed to drop from the bed-like structure 3 into the bottom part of the exhaust gas scrubber, the bed-like structure 3 is supported from below by the support grate 14 and/or another structure, in which case the grate and/or the other structure has to be perforated such that the size of apertures/openings is selected to be smaller than the size of the filler pieces 3a. The diameter of the apertures or openings is 2 to 20 mm, for example (or even 20 to 30 mm), in which case the size of the filler pieces 3a is larger than this.

Inside the bed-like structure 3, a tubular by-pass path 6 is provided to enable the flow of exhaust gases past the bed-like structure 3 when the exhaust gases are allowed to flow through the by-pass path 6. The tubular by-pass path 6 is defined by a tubular structure 51 surrounded by the bed-like structure 3. The bed-like structure 3 surrounds the tubular structure 51 annularly. An external diameter of the bed-like structure 3 generally ranges between 1500 and 40000 mm, in which case its height may typically be 1000 to 2500 mm. The size of the diameter of the by-pass path 6 highly depends on the output of the ship engine. A typical diameter range is 500 to 1200 mm. The by-pass path 6 is provided with blocking devices 10 including a blocking plate 10a, which in Figure 2 is shown in a blocking position, thus preventing exhaust gases from flowing in the by-pass path 6. The blocking plate 10a is settable in an open position, which in Figure 2 is shown in broken line. In order to move the blocking plate 10a from the blocking position to the open position, and vice versa, the blocking plate is hinged to the support grate 14. Hinging 10b is provided at a circumference of the tubular structure 51 such that a pivot axis settles at the circumference of the blocking plate 10a, tangentially to the circumference of the tubular structure. Alternatively, the blocking plate 10a may be fastened to the tubular structure 51 rather than to the support grate 14. The blocking devices 10 also include an opening mechanism including an actuator 10c (e.g. a puller) provided for instance with a manually operated elongated member 10d, such as a chain, to enable locking 10e associated with the blocking plate 10a to be opened in order to open the blocking plate 10a. The implementation of the opening mechanism and the locking 10e is not described in closer detail herein because they are easy to design by a person skilled in the art. The locking 10e may be a spring-loaded latch (not shown), for instance, which locks into a recess or against a shoulder (not shown).

Inside the exhaust gas scrubber 1, at its bottom end and below the bed-like structure, is provided a filter 12 to prevent filler pieces (or another filler material) possibly becoming detached from the bed-like structure 3 from entering the discharge outlet 13a leading to the discharge pipe 13 for removing the effluent. The filter 12 is located below the support grate 14, at a distance from the support grate. The distance may be for instance 500 to 1500 mm below the support grate 14. Typically, the larger the vessel 200, the greater said distance. In Figure 3, which shows a section along line III - III of Figure 2, the filter is shown from above. A diameter D1 of the filter 12 corresponds to a diameter D2 of the exhaust gas scrubber 1. Owing to the filter 12, no filler pieces 3a (or another filler material) that could easily damage the pump 41 are allowed to enter the discharge pipe 13 or consequently the pump 41, either (cf. Figure 1). Owing to the filter 12, no need exists to install a duplex filter or another filter in the line 40 before the pump 41, cf. the filter 49 drawn in broken line in Figure 1. This is an important point and also a great advantage of the invention.

The filter 12 is advantageously plate-like, comprising a plurality of through-holes 60 whose diameter is 2 to 20 mm, for example. The filter 12 is preferably horizontal. The filter 12 in the form of a plate may also be referred to as an aperture plate. The diameter of the apertures 60 may be larger than what is stated above, for example 30 mm, or even 50 mm, in which case a diameter range of 20 to 50 mm is thus also possible. The diameter of the apertures 60 depends on the size of the filler pieces 3a in the bed-like structure 3. By general definition, the diameter of the apertures 60 should be smaller than the smallest diameter of the filler pieces so as to prevent the filler pieces from passing through the filter 12. In the grate 14 or in another structure supporting the bed-like structure from below, the size (diameter) of the apertures is typically larger than the size (diameter) of the apertures 60 of the filter 12. The total surface area of the apertures 60 is advantageously at least 1.3 x, and more advantageously at least 1.5 x, the cross-sectional area of the discharge pipe 13 and the discharge outlet 13a. Thus, if the diameter of the discharge pipe 13 is for instance 150 mm and the surface area is 35300 mm², the total surface area of the apertures 60 is advantageously at least 46000 mm², and more advantageously at least 53000 mm².

The filter 12 is mounted in the exhaust gas scrubber 1 at a height H1 from the bottom of the exhaust gas scrubber 1. The filter 12 may be supported from below by a shoulder (not shown), or it may be supported in another manner readily occurring to a person skilled in the art. The height H1 is above a height H2 of a surface 52 of the effluent 53 accumulating in the bottom space of the exhaust gas scrubber 1 and below the exhaust gas feed point 34. Owing to the height position of the filter 12, the filter 12 prevents in practice the effluent from entering the exhaust gas feed channel 2 when the ship rolls and tilts in a storm. As the ship rolls, the effluent below the filter 12 hits an underside surface of the filter and water is through the apertures 60 in the filter carried above the filter 12 in the form of sprays and/or droplets only. In practice, no such minor water spray above the filter 12 is harmful and no danger exists that it would disturb the operation of the ship engine. It is understood from the above that it is advantageous that the diameter of the apertures 60 is small enough for the filter 12 to efficiently prevent water from entering the ship engine. When the diameter D2 of the exhaust gas scrubber 1 and the diameter D1 of the filter 12 is approximately 1500 to 4000 mm, the number of apertures 60 in the filter is several hundreds, even thousands. The shape of the apertures 60 may vary; rather than round ones, the apertures may be in the form of long slots, in which case their number may be relatively small.

When necessary, the filter 12 is easy to clean. The cleaning is carried out via a service door 7 arranged above the filter 12 in the exhaust gas scrubber 1. The service door 7 is preferably mounted in a wall of the exhaust gas scrubber, at approximately 0.1 to 1 m above the filter 12.

In ordinary use, the exhaust gas scrubber 1 of Figure 2 serves as an exhaust gas scrubber wherein exhaust gases are cleaned while passing through the bed-like structure 3. The blocking device 10 and blocking plate 10a are then closed, as shown in Figure 2, in which case no exhaust gases are allowed to flow in the by-pass path 6. The blocking plate 10a is solid in order to prevent exhaust gases from flowing therethrough, at least in any significant amount. If the bed-like structure 3 becomes clogged enough to disturb the operation of the ship engine, the elongated member 10d (e.g. a chain) is pulled by the actuator 10c to open the locking 10e, the blocking plate 10a being brought into the open position illustrated in broken line. When the blocking plate 10a is in the open position, the blocking device 10 is in the open position, in which case exhaust gases containing impurities are allowed to flow from the first space 8 of the exhaust gas scrubber 1 through the by-pass path 6 to the second space 9 of the exhaust gas scrubber, the exhaust gases moving past the bed-like structure 3. Arrow A illustrates in general the flow of exhaust gases into the exhaust gas scrubber 1. Even though arrow A points to the by-pass path 6, no exhaust gases flow in the by-pass path when the blocking plate 10a is closed, i.e. in the position according to Figure 2. When the blocking plate 10a is opened, exhaust gases are allowed to flow in the by-pass path 6 in the direction of arrow A. Even if scrubbing water were sprayed onto the exhaust gases, they do not become much cleaner in the by-pass path 6 while flowing in the by-pass path 6. Owing to the by-pass path 6, the operation of the ship engine is not disturbed, which is the essential purpose of the by-pass path. The by-pass path 6 is kept open until the bed-like structure 3 has been cleaned or replaced by one allowing sufficiently good permeation of exhaust gases in terms of impeccable operation of the engine. As the bed-like structure 3 is made exhaust-gas-permeable in the desired manner by servicing or replacing the bed-like structure (for instance while the ship is in harbour), it is arranged that the blocking plate 10a is set in the blocking position shown in Figure 2, after which the exhaust gas scrubber may again work in the desired manner for cleaning exhaust gases.

Figure 4 shows an implementation of an exhaust gas scrubber alternative to that shown in Figure 2. In Figures 2 and 4, like reference numbers identify like structures and parts. The embodiment of Figure 4 differs from the embodiment of Figure 2 in that it comprises a blocking device 10' comprising a blocking plate 10a' provided with through-holes 31', and a tubular structure 51' above the blocking plate is loaded with filler pieces 30a'. The tubular structure 51' defines a tubular cleaning space 70'for cleaning exhaust gases while they pass from the first space 8' of the exhaust gas scrubber 1', which is located upstream of the bed-like structure 3' when viewed in the flow direction of exhaust gases, to the second space 9' of the exhaust gas scrubber, which is located downstream of the bed-like structure when viewed in the flow direction of exhaust gases. The holes 31' of the blocking plate 10a' are dimensioned so as to prevent the filler material (filler pieces 30a') inside the tubular structure 51' from passing through the holes. The holes are for instance openings with a diameter of preferably the same or in the same size range as the diameter of the apertures in the structure (the support grate 14' or another structure) supporting the bed-like structure 3' from below. In the embodiment of Figure 4, the blocking device 10' allows exhaust gases to flow through the by-pass path 6' even when the blocking device 10' is in the blocking position. If impurities accumulate both in the bed-like structure 3' and in the cleaning space 70' enough for the desired operation of the engine to be prevented, the blocking plate 10a' is opened, in which case the filler pieces 30a' in the cleaning space 70' are allowed to drop onto the filter 12' located below, the filler pieces accumulating on the top surface of the filter. In such a case, the exhaust gases are allowed to flow practically unobstructedly in the by-pass path 6' defined by the tubular structure 51', past the (clogged) bed-like structure 3', thus enabling the ship engine to operate unobstructedly. The filter 12' arranged in the bottom part of the exhaust gas scrubber 1' is particularly important in the embodiment of Figure 4 of the exhaust gas scrubber, where some filler material is bound to end up in the bottom part of the exhaust gas scrubber upon the blocking plate 10a being opened.

Figure 5 shows a section along line V - V of Figure 4.

An advantage of the embodiment of Figure 4 over the embodiment of Figure 2 is that it is possible to improve the scrubbing capacity of the exhaust gas scrubber with respect to its outer dimensions as both the bed-like structure 3' and the cleaning space 70' serve as exhaust-gas-cleaning structures. In the embodiment of Figure 4, the blocking device might alternatively comprise a blocking plate provided with holes and hinged as shown in Figure 2, for example. The embodiment of Figure 4 is particularly advantageous when only little space is provided on the ship for the exhaust gas scrubber.

In the above, the invention is described by means of examples, wherefore it is noted that the invention may be implemented in many ways within the scope of the attached claims. Consequently, the filter (12, 12') may operate in a desired manner even if its detailed structure and the shaping and dimensioning of the apertures provided therein vary.

## Claims

1. An exhaust gas scrubber (1, 1') for cleaning exhaust gases from combustion engines, particularly ship engines, of impurities, the exhaust gas scrubber comprising an exhaust gas feed point (34, 34') to be connected to a feed channel (2, 2') for feeding exhaust gases containing impurities into and through a bed-like structure (3, 3') containing a filler material and arranged inside the exhaust gas scrubber and being, in an upright use position of the exhaust gas scrubber, where the flow direction of the exhaust gases is upwards, from below supported by a support grate (14, 14') having apertures, the exhaust gas scrubber comprising feed devices (5, 5') for feeding scrubbing water into the bed-like structure in a direction different from a flow direction (A, A') of exhaust gases in the bed-like structure in order to reduce impurities in the exhaust gases such that the exhaust gases exit, cleaned, the bed-like structure and a discharge channel (4, 4') of the exhaust gas scrubber and the exhaust gas scrubber comprising a discharge outlet (13a, 13a') located in a bottom part of the exhaust gas scrubber and provided for discharging the scrubbing water containing impurities of the exhaust gases, i.e. effluent, from the exhaust gas scrubber, **characterized in that** the bottom part of the exhaust gas scrubber (1, 1') is provided with a filter (12, 12') located, in the upright use position of the exhaust gas scrubber (1, 1'), under the support grate (14, 14'), at a distance from the support grate (14, 14'), the filter (12, 12') having apertures (60, 60') having a size smaller than the size of the apertures in the grate (14, 14') to prevent the filler material from entering the discharge outlet (13a, 13a').

2. An exhaust gas scrubber as claimed in claim 1, **characterized in that** the filler material comprises filler pieces (3a, 3a') and that the diameter of the apertures (60, 60') in the filter (12, 12') is smaller than the smallest diameter of filler pieces in the bed-like structure (3, 3').

3. An exhaust gas scrubber as claimed in claim 2, **characterized in that** the diameter of the apertures (60, 60') in the filter (12, 12') is 2 to 50 mm.

4. An exhaust gas scrubber as claimed in any one of the preceding claims, **characterized in that** the number of apertures (60, 60') in the filter (12, 12') is more than a hundred.

5. An exhaust gas scrubber as claimed in any one of the preceding claims, **characterized in that** the filter (12, 12') is arranged, in the upright use position of the exhaust gas scrubber (1, 1'), below an inlet of the exhaust gas feed channel (2, 2').

6. An exhaust gas scrubber as claimed in claim 5, **characterized in that** the filter (12, 12') is arranged at a distance (H1) from a bottom of the exhaust gas scrubber (1, 1'), the distance being greater than a distance (H2) of a surface (52, 52') of scrubbing water (53, 53') containing impurities and accumulating in the bottom part of the exhaust gas scrubber, i.e. the effluent, from the bottom of the exhaust gas scrubber.

7. An exhaust gas scrubber as claimed in claim 5 or 6, **characterized in that** the filter (12, 12') is a filter plate whose diameter (D1, D1') corresponds to the diameter (D2, D2') of the exhaust gas scrubber.

8. An exhaust gas scrubber as claimed in any one of the preceding claims, **characterized in**
**that** the exhaust gas scrubber (1') is provided with at least one by-pass path (6') for flow of exhaust gases, the by-pass path being arranged inside a vessel (200') of the exhaust gas scrubber for conveying exhaust gases containing impurities past the bed-like structure (3') and further out of the exhaust gas scrubber, the at least one by-pass path having blocking devices (10') for setting the by-pass path from an open position to a blocking position in order to prevent impurities-containing exhaust gases from flowing through the by-pass path and, vice versa, from the blocking position to the open position in order to allow impurities-containing exhaust gases to flow through the by-pass path, and
**that** the blocking devices (10') comprise a perforated (31') blocking plate (10a'), and when viewed downstream thereof, in the direction of flow (A') of the exhaust gases, the by-pass path (6') is provided with filler pieces (30a') for forming a cleaning space (70') for cleaning exhaust gases, the cleaning space being arranged to be emptied of the filler pieces such that the filler pieces drop onto the filter (12') when the blocking plate (10a') moves from the blocking position to the open position.

9. An exhaust gas scrubber as claimed in claim 8, **characterized in that** the blocking plate (10a') is arranged to support the filler pieces (30a') in the cleaning space (70') from below when the blocking plate is in the blocking position.

10. A ship (100) comprising an exhaust gas scrubber for cleaning exhaust gases from a ship engine of impurities, the exhaust gas scrubber comprising an exhaust gas feed point (34, 34') in association with a feed channel (2, 2') connected thereto for feeding exhaust gases containing impurities into and through a bed-like structure (3, 3') containing a filler material and arranged inside the exhaust gas scrubber and being, in an upright use position of the exhaust gas scrubber, where the flow direction of the exhaust gases is upwards, from below supported by a support grate (14, 14') having apertures, the exhaust gas scrubber comprising feed devices (5, 5') for feeding scrubbing water into the bed-like structure in a direction different from a flow direction (A, A') of exhaust gases in the bed-like structure in order to reduce impurities in the exhaust gases such that the exhaust gases exit, cleaned, the bed-like structure and a discharge channel (4, 4') of the exhaust gas scrubber and the exhaust gas scrubber comprising a discharge outlet (13a, 13a') located in a bottom part of the exhaust gas scrubber and provided for discharging the scrubbing water containing impurities of the exhaust gases, i.e. effluent, from the exhaust gas scrubber, **characterized in that** the bottom part of the exhaust gas scrubber (1, 1') is provided with a filter (12, 12') located, in the upright use position of the exhaust gas scrubber (1, 1'), under the support grate (14, 14'), at a distance from the support grate (14, 14'), the filter (12, 12') having apertures (60, 60') having a size smaller than the size of the apertures in the grate (14, 14') to prevent the filler material from dropping into the discharge outlet (13a, 13a').

11. A ship as claimed in claim 10, **characterized in that** the diameter of the apertures (60, 60') in the filter (12, 12') is smaller than the smallest diameter of filler pieces (3a, 3a') in the bed-like structure (3, 3') .

12. A ship as claimed in claim 10, **characterized in that** the diameter of the apertures (60, 60') in the filter (12, 12') is 2 to 50 mm.

13. A ship as claimed in any one of the preceding claims 10 to 12, **characterized in that** the filter (12, 12') is arranged, in the upright use position of the exhaust gas scrubber (1, 1'), below the exhaust gas feed point (34, 34').

14. A ship as claimed in claim 13, **characterized in that** the filter (12, 12') is arranged at a distance (H1, H1') from a bottom of the exhaust gas scrubber (1, 1'), the distance being greater than a distance (H2, H2') of a surface of scrubbing water containing impurities and accumulating in the bottom part of the exhaust gas scrubber, i.e. the effluent, from the bottom of the exhaust gas scrubber.

15. A ship as claimed in any one of the preceding claims 11 to 14, **characterized in that**
the exhaust gas scrubber (1') is for flow of exhaust gases provided with at least one by-pass path (6') for conveying exhaust gases containing impurities past the bed-like structure (3') and further out of the exhaust gas scrubber, the at least one by-pass path having blocking devices (10') for setting the by-pass path from an open position to a blocking position in order to prevent impurities-containing exhaust gases from flowing through the by-pass path and, vice versa, from the blocking position to the open position in order to allow impurities-containing exhaust gases to flow through the by-pass path, and
that the blocking devices (10') comprise a perforated (31') blocking plate (10a'), and when viewed downstream thereof, in the direction of flow (A') of the exhaust gases, the by-pass path (6') is provided with filler pieces (30a') for forming a cleaning space (70') for cleaning exhaust gases, the cleaning space being arranged to be emptied of the filler pieces such that the filler pieces drop onto the filter (12') when the blocking plate (10a') moves from the blocking position to the open position.

16. A ship as claimed in any one of the preceding claims 11 to 15, **characterized in that** it comprises a cleaning unit (101) arranged in connection with the exhaust gas scrubber (1, 1') for receiving and cleaning the effluent supplied from a discharge pipe (13, 13') of the exhaust gas scrubber (1, 1') and along a line (40), the line (40) including a pump (41) for transferring the effluent from the bottom part of the exhaust gas scrubber to the cleaning unit (101) comprising an effluent circuit for circulating the effluent in the effluent circuit which includes at least one membrane filter.

## Patentansprüche

1. Abgaswäscher (1, 1') zum Reinigen von Abgasen aus Verbrennungsmotoren, insbesondere Schiffsmotoren, von Verunreinigungen, wobei der Abgaswäscher eine Abgaseinspeisestelle (34, 34') zum Verbinden mit einem Einspeisekanal (2, 2') zum Einspeisen von Abgasen, die Verunreinigungen enthalten, in und durch eine bettartige Struktur (3, 3'), die ein Füllmaterial enthält und im Inneren des Abgaswäschers angeordnet ist und die in einer aufrechten Verwendungsposition des Abgaswäschers, bei der die Strömungsrichtung der Abgase aufwärts ist, von unten durch einen Auflagerost (14, 14') mit Öffnungen gestützt wird, umfasst, wobei der Abgaswäscher Einspeisevorrichtungen (5, 5') zum Einspeisen von Waschwasser in die bettartige Struktur in einer anderen Richtung als der Strömungsrichtung (A, A') von Abgasen in der bettartigen Struktur umfasst, um Verunreinigungen in den Abgasen zu reduzieren, sodass die Abgase gereinigt aus der bettartigen Struktur und einem Abführkanal (4, 4') des Abgaswäschers austreten, und der Abgaswäscher einen Abführauslass (13a, 13a') umfasst, der sich in einem Bodenteil des Abgaswäschers befindet und zum Abführen des Waschwassers, das Verunreinigungen der Abgase enthält, d.h. des Abwassers, aus dem Abgaswäscher vorgesehen ist, **dadurch gekennzeichnet, dass** der Bodenteil des Abgaswäschers (1, 1') mit einem Filter (12, 12') versehen ist, der sich in der aufrechten Verwendungsposition des Abgaswäschers (1, 1') unter dem Auflagerost (14, 14') in einer Entfernung von dem Auflagerost (14, 14') befindet, wobei der Filter (12, 12') Öffnungen (60, 60') mit einer geringeren Größe als die Öffnungen im Rost (14, 14') besitzt, um zu verhindern, dass das Füllmaterial in den Abführauslass (13a, 13a') eintritt.

2. Abgaswäscher nach Anspruch 1, **dadurch gekennzeichnet, dass** das Füllmaterial Füllstücke (3a, 3a') umfasst und dass der Durchmesser der Öffnungen (60, 60') in dem Filter (12, 12') kleiner ist als der kleinste Durchmesser der Füllstücke in der bettartigen Struktur (3, 3').

3. Abgaswäscher nach Anspruch 2, **dadurch gekennzeichnet, dass** der Durchmesser der Öffnungen (60, 60') im Filter (12, 12') 2 bis 50 mm beträgt.

4. Abgaswäscher nach einem der vorstehenden Ansprüche, **dadurch gekennzeichnet, dass** die Anzahl der Öffnungen (60, 60') im Filter (12, 12') mehr als hundert beträgt.

5. Abgaswäscher nach einem der vorstehenden Ansprüche, **dadurch gekennzeichnet, dass** der Filter (12, 12') in der aufrechten Verwendungsposition des Abgaswäschers (1, 1') unterhalb eines Einlasses des Abgaseinspeisekanals (2, 2') angeordnet ist.

6. Abgaswäscher nach Anspruch 5, **dadurch gekennzeichnet, dass** der Filter (12, 12') in einer Entfernung (H1) von einem Boden des Abgaswäschers (1, 1') angeordnet ist, wobei die Entfernung größer ist als eine Entfernung (H2) einer Oberfläche (52, 52') des Waschwassers (53, 53'), das Verunreinigungen enthält und sich im Bodenteil des Abgaswäschers ansammelt, d.h. des Abwassers, vom Boden des Abgaswäschers.

7. Abgaswäscher nach Anspruch 5 oder 6, **dadurch gekennzeichnet, dass** der Filter (12, 12') eine Filterplatte ist, deren Durchmesser (D1, D1') dem Durchmesser (D2, D2') des Abgaswäschers entspricht.

8. Abgaswäscher nach einem der vorstehenden Ansprüche, **dadurch gekennzeichnet,**
**dass** der Abgaswäscher (1') mit zumindest einem Umgehungspfad (6') für die Strömung von Abgasen versehen ist, wobei der Umgehungspfad zum Befördern von Abgasen, die Verunreinigungen enthalten, an der bettartigen Struktur (3') und weiter aus dem Abgaswäscher hinaus innerhalb eines Gefäßes (200') des Abgaswäschers angeordnet ist, wobei der zumindest eine Umgehungspfad Sperrvorrichtungen (10') zum Versetzen des Umgehungspfades aus einer offenen Position in eine Sperrposition, um zu verhindern, dass Verunreinigungen enthaltende Abgase durch den Umgehungspfad strömen, und umgekehrt aus der Sperrposition in die offene Position besitzt, um zu ermöglichen, dass Verunreinigungen enthaltende Abgase durch den Umgehungspfad strömen, und
**dass** die Sperrvorrichtungen (10') eine perforierte (31') Sperrplatte (10a') umfassen und stromabwärts davon betrachtet in Richtung der Strömung (A') der Abgase der Umgehungspfad (6') mit Füllstücken (30a') zum Bilden eines Reinigungsraums (70') zum Reinigen von Abgasen versehen ist, wobei der Reinigungsraum angeordnet ist, von den Füllstücken so geleert zu werden, dass die Füllstücke auf den Filter (12') fallen, wenn die Sperrplatte (10a') sich aus der Sperrposition in die offene Position bewegt.

9. Abgaswäscher nach Anspruch 8, **dadurch gekennzeichnet, dass** die Sperrplatte (10a') angeordnet ist, die Füllstücke (30a') von unten in dem Reinigungsraum (70') zu halten, wenn die Sperrplatte in der Sperrposition ist.

10. Schiff (100), umfassend einen Abgaswäscher zum Reinigen von Abgasen aus einem Schiffsmotors von Verunreinigungen, wobei der Abgaswäscher eine Abgaseinspeisestelle (34, 34') in Verbindung mit einem Einspeisekanal (2, 2'), der daran verbunden ist, zum Einspeisen von Abgasen, die Verunreinigungen enthalten, in und durch eine bettartige Struktur (3, 3'), die ein Füllmaterial enthält und im Inneren des Abgaswäschers angeordnet ist und die in einer aufrechten Verwendungsposition des Abgaswäschers, bei der die Strömungsrichtung der Abgase aufwärts ist, von unten durch einen Auflagerost (14, 14') mit Öffnungen gestützt wird, umfasst, wobei der Abgaswäscher Einspeisevorrichtungen (5, 5') zum Einspeisen von Waschwasser in die bettartige Struktur in einer anderen Richtung als der Strömungsrichtung (A, A') von Abgasen in der bettartigen Struktur umfasst, um Verunreinigungen in den Abgasen zu reduzieren, sodass die Abgase gereinigt aus der bettartigen Struktur und einem Abführkanal (4, 4') des Abgaswäschers austreten, und der Abgaswäscher einen Abführauslass (13a, 13a') umfasst, der sich in einem Bodenteil des Abgaswäschers befindet und zum Abführen des Waschwassers, das Verunreinigungen der Abgase enthält, d.h. des Abwassers, aus dem Abgaswäscher vorgesehen ist, **dadurch gekennzeichnet, dass** der Bodenteil des Abgaswäschers (1, 1') mit einem Filter (12, 12') versehen ist, der sich in der aufrechten Verwendungsposition des Abgaswäschers (1, 1') unter dem Auflagerost (14, 14') in einer Entfernung von dem Auflagerost (14, 14') befindet, wobei der Filter (12, 12') Öffnungen (60, 60') mit einer geringeren Größe als die Öffnungen im Rost (14, 14') besitzt, um zu verhindern, dass das Füllmaterial in den Abführauslass (13a, 13a') fällt.

11. Schiff nach Anspruch 10, **dadurch gekennzeichnet, dass** der Durchmesser der Öffnungen (60, 60') in dem Filter (12, 12') kleiner ist als der kleinste Durchmesser der Füllstücke in der bettartigen Struktur (3, 3').

12. Schiff nach Anspruch 10, **dadurch gekennzeichnet, dass** der Durchmesser der Öffnungen (60, 60') in dem Filter (12, 12') 2 bis 50 mm beträgt.

13. Schiff nach einem der vorstehenden Ansprüche 10 bis 12, **dadurch gekennzeichnet, dass** der Filter (12, 12') in der aufrechten Verwendungsposition des Abgaswäschers (1, 1') unterhalb der Abgaseinspeisestelle (34, 34') angeordnet ist

14. Schiff nach Anspruch 13, **dadurch gekennzeichnet, dass** der Filter (12, 12') in einer Entfernung (H1, H1') von einem Boden des Abgaswäschers (1, 1') angeordnet ist, wobei die Entfernung größer ist als eine Entfernung (H2, H2') einer Oberfläche des Waschwassers, das Verunreinigungen enthält und sich im Bodenteil des Abgaswäschers ansammelt, d.h. des Abwassers, vom Boden des Abgaswäschers.

15. Schiff nach einem der Ansprüche 11 bis 14, **dadurch gekennzeichnet, dass**
der Abgaswäscher (1') für die Strömung von Abgasen mit zumindest einem Umgehungspfad (6') zum Befördern von Abgasen, die Verunreinigungen enthalten, an der bettartigen Struktur (3') und weiter aus dem Abgaswäscher hinaus versehen ist, wobei der zumindest eine Umgehungspfad Sperrvorrichtungen (10') zum Versetzen des Umgehungspfades aus einer offenen Position in eine Sperrposition, um zu verhindern, dass Verunreinigungen enthaltende Abgase durch den Umgehungspfad strömen, und umgekehrt aus der Sperrposition in die offene Position besitzt, um zu ermöglichen, dass Verunreinigungen enthaltende Abgase durch den Umgehungspfad strömen, und
dass die Sperrvorrichtungen (10') eine perforierte (31') Sperrplatte (10a') umfassen und stromabwärts davon betrachtet in Richtung der Strömung (A') der Abgase der Umgehungspfad (6') mit Füllstücken (30a') zum Bilden eines Reinigungsraums (70') zum Reinigen von Abgasen versehen ist, wobei der Reinigungsraum angeordnet ist, von den Füllstücken so geleert zu werden, dass die Füllstücke auf den Filter (12') fallen, wenn die Sperrplatte (10a') sich aus der Sperrposition in die offene Position bewegt.

16. Schiff nach einem der vorstehenden Ansprüche 11 bis 15, **dadurch gekennzeichnet, dass** es eine Reinigungseinheit (101), die in Verbindung mit dem Abgaswäscher (1, 1') angeordnet ist, zum Aufnehmen und Reinigen des aus einem Abführrohr (13, 13') des Abgaswäschers (1, 1') zugeführten Abwassers und entlang einer Leitung (40) umfasst, wobei die Leitung (40) eine Pumpe (41) zum Befördern des Abwassers aus dem Bodenteil des Abgaswäschers in die Reinigungseinheit (101) aufweist, die einen Abwasserkreislauf für den Umlauf des Abwassers im Abwasserkreislauf umfasst, der zumindest einen Membranfilter aufweist.

## Revendications

1. Épurateur de gaz d'échappement (1, 1') pour nettoyer les gaz d'échappement provenant de moteurs à combustion, en particulier de moteurs de navire, des impuretés, l'épurateur de gaz d'échappement comprenant un point d'alimentation en gaz d'échappement (34, 34') à raccorder à un canal d'alimentation (2, 2') pour acheminer les gaz d'échappement contenant des impuretés dans et à travers une structure de type lit (3, 3') contenant un matériau de remplissage et agencée à l'intérieur de l'épurateur de gaz d'échappement et étant, dans une position d'utilisation verticale de l'épurateur de gaz d'échappement, où la direction d'écoulement des gaz d'échappement est vers le haut, par le dessous supportée par une grille de support (14, 14') comportant des ouvertures, l'épurateur de gaz d'échappement comprenant des dispositifs d'alimentation (5, 5') pour acheminer de l'eau d'épuration dans la structure de type lit dans une direction différente d'une direction d'écoulement (A, A') de gaz d'échappement dans la structure de type lit afin de réduire les impuretés dans les gaz d'échappement de telle sorte que les gaz d'échappement sortent, nettoyés, de la structure de type lit et un canal d'évacuation (4, 4') de l'épurateur de gaz d'échappement et l'épurateur de gaz d'échappement comprenant une sortie d'évacuation (13a, 13a') située dans une partie inférieure de l'épurateur de gaz d'échappement et prévue pour évacuer l'eau d'épuration contenant des impuretés des gaz d'échappement, c'est-à-dire effluents, de l'épurateur de gaz d'échappement, **caractérisé en ce que** la partie inférieure de l'épurateur de gaz d'échappement (1, 1') est pourvue d'un filtre (12, 12') située, dans la position d'utilisation verticale de l'épurateur de gaz d'échappement (1, 1'), sous la grille de support (14, 14'), à une distance de la grille de support (14, 14'), le filtre (12, 12') comportant des ouvertures (60, 60') ayant une taille inférieure à la taille des ouvertures de la grille (14, 14') pour empêcher le matériau de remplissage d'entrer dans la sortie d'évacuation (13a, 13a').

2. Épurateur de gaz d'échappement selon la revendication 1, **caractérisé en ce que** le matériau de remplissage comprend des pièces de remplissage (3a, 3a') et **en ce que** le diamètre des ouvertures (60, 60') dans le filtre (12, 12') est inférieur au diamètre le plus petit de pièces de remplissage dans la structure de type lit (3, 3').

3. Épurateur de gaz d'échappement selon la revendication 2, **caractérisé en ce que** le diamètre des ouvertures (60, 60') dans le filtre (12, 12') est de 2 à 50 mm.

4. Épurateur de gaz d'échappement selon l'une quelconque des revendications précédentes, **caractérisé en ce que** le nombre d'ouvertures (60, 60') dans le filtre (12, 12') est supérieur à cent.

5. Épurateur de gaz d'échappement selon l'une quelconque des revendications précédentes, **caractérisé en ce que** le filtre (12, 12') est agencé, dans la position d'utilisation verticale de l'épurateur de gaz d'échappement (1, 1'), sous une entrée du canal d'alimentation en gaz d'échappement (2, 2').

6. Épurateur de gaz d'échappement selon la revendication 5, **caractérisé en ce que** le filtre (12, 12') est agencé à une distance (H1) d'un fond de l'épurateur de gaz d'échappement (1, 1'), la distance étant supérieure à une distance (H2) d'une surface (52, 52') d'eau d'épuration (53, 53') contenant des impuretés et s'accumulant dans la partie de fond de l'épurateur de gaz d'échappement, c'est-à-dire l'effluent, depuis le fond de l'épurateur de gaz d'échappement.

7. Épurateur de gaz d'échappement selon la revendication 5 ou 6, **caractérisé en ce que** le filtre (12, 12') est une plaque filtrante dont le diamètre (D1, D1') correspond au diamètre (D2, D2') de l'épurateur de gaz d'échappement.

8. Épurateur de gaz d'échappement selon l'une quelconque des revendications précédentes, **caractérisé en ce**
**que** l'épurateur de gaz d'échappement (1') est pourvu d'au moins un chemin de dérivation (6') pour l'écoulement de gaz d'échappement, le chemin de dérivation étant agencé à l'intérieur d'une cuve (200') de l'épurateur de gaz d'échappement pour transporter les gaz d'échappement contenant des impuretés au-delà de la structure de type lit (3') et en outre à l'extérieur de l'épurateur de gaz d'échappement, l'au moins un chemin de dérivation ayant des dispositifs de blocage (10') pour faire passer le chemin de dérivation d'une position ouverte à une position de blocage afin d'empêcher les gaz d'échappement contenant des impuretés de s'écouler à travers le chemin de dérivation et, vice versa, de la position de blocage à la position ouverte afin de permettre aux gaz d'échappement contenant des impuretés de s'écouler à travers le chemin de dérivation, et
**que** les dispositifs de blocage (10') comprennent une plaque de blocage (10a') perforée (31'), et quand on regarde en aval de ceux-ci, dans la direction d'écoulement (A') des gaz d'échappement, le chemin de dérivation (6') est pourvu de pièces de remplissage (30a') pour former un espace de nettoyage (70') pour nettoyer les gaz d'échappement, l'espace de nettoyage étant agencé pour être vidé des pièces de remplissage de telle sorte que les pièces de remplissage tombent sur le filtre (12') quand la plaque de blocage (10a') se déplace de la position de blocage à la position ouverte.

9. Épurateur de gaz d'échappement selon la revendication 8, **caractérisé en ce que** la plaque de blocage (10a') est agencée pour supporter les pièces de remplissage (30a') dans l'espace de nettoyage (70') par le dessous quand la plaque de blocage est dans la position de blocage.

10. Navire (100) comprenant un épurateur de gaz d'échappement pour nettoyer les gaz d'échappement provenant d'un moteur de navire des impuretés, l'épurateur de gaz d'échappement comprenant un point d'alimentation en gaz d'échappement (34, 34') en association avec un canal d'alimentation (2, 2') raccordé à celui-ci pour acheminer les gaz d'échappement contenant des impuretés dans et à travers une structure de type lit (3, 3') contenant un matériau de remplissage et agencée à l'intérieur de l'épurateur de gaz d'échappement et étant, dans une position d'utilisation verticale de l'épurateur de gaz d'échappement, où la direction d'écoulement des gaz d'échappement est vers le haut, par le dessous supportée par une grille de support (14, 14') comportant des ouvertures, l'épurateur de gaz d'échappement comprenant des dispositifs d'alimentation (5, 5') pour acheminer de l'eau d'épuration dans la structure de type lit dans une direction différente d'une direction d'écoulement (A, A') de gaz d'échappement dans la structure de type lit afin de réduire les impuretés dans les gaz d'échappement de telle sorte que les gaz d'échappement sortent, nettoyés, de la structure de type lit et un canal d'évacuation (4, 4') de l'épurateur de gaz d'échappement et l'épurateur de gaz d'échappement comprenant une sortie d'évacuation (13a, 13a') située dans une partie inférieure de l'épurateur de gaz d'échappement et prévue pour évacuer l'eau d'épuration contenant des impuretés des gaz d'échappement, c'est-à-dire effluents, de l'épurateur de gaz d'échappement, **caractérisé en ce que** la partie inférieure de l'épurateur de gaz d'échappement (1, 1') est pourvue d'un filtre (12, 12') situé, dans la position d'utilisation verticale de l'épurateur de gaz d'échappement (1, 1'), sous la grille de support (14, 14'), à une distance de la grille de support (14, 14'), le filtre (12, 12') comportant des ouvertures (60, 60') ayant une taille inférieure à la taille des ouvertures de la grille (14, 14') pour empêcher le matériau de remplissage de tomber dans la sortie d'évacuation (13a, 13a').

11. Navire selon la revendication 10, **caractérisé en ce que** le diamètre des ouvertures (60, 60') dans le filtre (12, 12') est inférieur au diamètre le plus petit de pièces de remplissage (3a, 3a') dans la structure de type lit (3, 3').

12. Navire selon la revendication 10, **caractérisé en ce que** le diamètre des ouvertures (60, 60') dans le filtre (12, 12') est de 2 à 50 mm.

13. Navire selon l'une quelconque des revendications précédentes 10 à 12, **caractérisé en ce que** le filtre (12, 12') est agencé, dans la position d'utilisation verticale de l'épurateur de gaz d'échappement (1, 1'), sous le point d'alimentation en gaz d'échappement (34, 34').

14. Navire selon la revendication 13, **caractérisé en ce que** le filtre (12, 12') est agencé à une distance (H1, H1') d'un fond de l'épurateur de gaz d'échappement (1, 1'), la distance étant supérieure à une distance (H2, H2') d'une surface d'eau d'épuration contenant des impuretés et s'accumulant dans la partie de fond de l'épurateur de gaz d'échappement, c'est-à-dire l'effluent, depuis le fond de l'épurateur de gaz d'échappement.

15. Navire selon l'une quelconque des revendications précédentes 11 à 14, **caractérisé en ce que**
l'épurateur de gaz d'échappement (1') est, pour l'écoulement de gaz d'échappement, pourvu d'au moins un chemin de dérivation (6') pour transporter les gaz d'échappement contenant des impuretés au-delà de la structure de type lit (3') et en outre à l'extérieur de l'épurateur de gaz d'échappement, l'au moins un chemin de dérivation ayant des dispositifs de blocage (10') pour faire passer le chemin de dérivation d'une position ouverte à une position de blocage afin d'empêcher les gaz d'échappement contenant des impuretés de s'écouler à travers le chemin de dérivation et, vice versa, de la position de blocage à la position ouverte afin de permettre aux gaz d'échappement contenant des impuretés de s'écouler à travers le chemin de dérivation, et
que les dispositifs de blocage (10') comprennent une plaque de blocage (10a') perforée (31'), et quand on regarde en aval de ceux-ci, dans la direction d'écoulement (A') des gaz d'échappement, le chemin de dérivation (6') est pourvu de pièces de remplissage (30a') pour former un espace de nettoyage (70') pour nettoyer les gaz d'échappement, l'espace de nettoyage étant agencé pour être vidé des pièces de remplissage de telle sorte que les pièces de remplissage tombent sur le filtre (12') quand la plaque de blocage (10a') se déplace de la position de blocage à la position ouverte.

16. Navire selon l'une quelconque des revendications précédentes 11 à 15, **caractérisé en ce qu'**il comprend une unité de nettoyage (101) agencée en raccordement avec l'épurateur de gaz d'échappement (1, 1') pour recevoir et nettoyer l'effluent apporté depuis un tuyau d'évacuation (13, 13') de l'épurateur de gaz d'échappement (1, 1') et le long d'une conduite (40), la conduite (40) incluant une pompe (41) pour transférer l'effluent depuis la partie de fond de l'épurateur de gaz d'échappement jusqu'à l'unité de nettoyage (101) comprenant un circuit d'effluent pour faire circuler l'effluent dans le circuit d'effluent qui inclut au moins un filtre à membrane.
